# EUROPEAN PATENT SPECIFICATION

(11) **EP 3 198 073 B1**
(45) Date of publication and mention of the grant of the patent: **07.11.2018**
(21) Application number: 15794338.2
(22) Date of filing: 21.09.2015
(51) Int. Cl.: D06N 7/00, C02F 5/06

(54) **METHOD FOR PRODUCING A FLOOR COVERING (INCLUDING CARPET AND CARPET TILE) WITH RECYCLED CONTENT**
VERFAHREN ZUR HERSTELLUNG EINES BODENBELAGES (MIT TEPPICH UND TEPPICHFLIESE) MIT RECYCELTEM INHALT
PROCÉDÉ DE PRODUCTION DE REVÊTEMENT DE SOL (Y COMPRIS UN TAPIS ET UNE DALLE DE TAPIS) AYANT UN CONTENU RECYCLÉ

(30) Priority: 24.09.2014 NL 2013521
(43) Date of publication of application: 02.08.2017
(73) Proprietor: Desso B.V., 5142 PA Waalwijk (NL)
(72) Inventor: KOPPERS, Henricus Martinus Marie, NL-4005 MN Tiel (NL); VAN OERS, Marinus Gerardus Maria, NL-4741 RT Hoeven (NL); CAMMAERT, Ludwig, Maria, Gerardus, Irma, NL-5056 PS Berkel-Enschot (NL)
(74) Representative: Patentwerk B.V.
(86) International application number: PCT/NL2015/050655
(87) International publication number: WO 2016/048142

(56) References cited:
- WO-A1-2004/078471
- WO-A1-2004/078473
- KENNETH L. MERCER ET AL: "Enhancing calcium carbonate precipitation by heterogeneous nucleation during chemical softening", JOURNAL AWWA 97:12, 16 December 2005 (2005-12-16), XP055194680,

## Description

The present invention relates to a method for producing floor covering (including carpet and carpet tile) with positive defined recycled content. In particular, the invention relates to the use of CaCO₃ that is a waste product from ground- or surfacewater purification process.

Carpet and carpet tiles comprise a top layer of yarns, in general tufted onto a cloth of web, which is provided with at least one, but in general multiple backing layers. These layers protect the top layer from wear that would be caused when the top layer was applied directly onto the floor, provide a "body" (right stiffness / flexibility), weight to the tile as well as ensuring dimensional stability.

Although the above description is focussed on carpets, the process can be used for other floor coverings as well, eg. VCT, Turf, Linoleum etc.

Several materials can be used for the backing, ranging from classic bitumen, PVC, EVA, PVB, SBR, PET to more environmental friendly polyolefin solutions that can be recycled. Herein, it is common practice to add CaCO₃ as a stabiliser / filler material, in as well the precoat as well as the heavy coating layer.

According to the state of the art, the CaCO₃ is purchased for that purpose from a manufacturers who are able to provide the CaCO₃, typically mined, in a quality standard that is consistent enough for use in the carpet or carpet tile backing. However, it has now become an aim to avoid mining of natural sources and to produce more environmental friendly, and for that reason an alternative to the existing natural sources of raw materials was searched for.

CaCO₃ is a material that is removed from ground- or surfacewater when softening, said water for consumption purposes. Also, the presence of low CaCO₃ content (also referred to a chalk) is positive for several apparatus such as washing machines and coffee makers, related to less lime scale, resulting in lower use of electricity and a longer lifespan. However, CaCO₃ is not gained in a pure form from the softening process.

Besides metals like iron and manganese, the residue comprises high percentages of sand (SiO₂) that was used as a grain material, which makes it useless for the production of carpet and carpet tiles, since the sand has a negative influence on the die cutting knifes or ultra sonic knives for cutting the carpet into tiles.

It is therefore a goal of the present invention to provide an alternative way for gaining CaCO₃ as a waste material, wherein the material is suitable for use for flooring and in particular carpet and carpet tile manufacturing, in particular without the need of further purification.

The invention thereto proposes a method for producing floor covering, preferably a carpet or carpet tile with recycled content, comprising the steps of gaining CaCO₃ from waste water by gaining CaCO₃ from the waste water during a softening process by adding a grain to the water, grafting the CaCO₃ to the grain and adding the CaCO₃ to the flooring material, in particular to the (fluid) backing material for a carpet tile and using the thus obtained backing material in a floor covering, preferably a carpet tile manufacturing process, wherein the grain comprises 90% or more CaCO₃.

By using CaCO₃ instead of sand (SiO₂) as a graining material, a purer final result is obtained, that can be used without the need of further purification as an addition for the flooring material, preferably carpet and carpet tiles. This enables operations of the manufacturing process, and saves the die cutting knives or ultra sonic cutting knives used for producing the flooring material, preferably carpet and carpet tiles.

In a further embodiment, the grain with grafted CaCO₃ is grounded to a predetermined particle size and particle size distribution before it is used as a backing material in a flooring material, in a floorcovering manufacturing process as an extra step.

Realising a predetermined distribution enables the production of a high quality carpet backing. One possible distribution that has proven to give good results is a distribution that comprises a D10 = 0 - 50 µm, D50 = 250-300 µm, D90 = 500 - 550 µm.

The process of grafting CaCO₃ can be speeded up by adding NaOH or Ca(HCO₃)₂ into the waste water. This leads to one of the following reactions:

2 NaOH + Ca(HCO₃)₂ -> CaCO₃ (sediment) + Na₂CO₂ + H₂O

or:

Ca(OH)₂ + Ca(HCO₃) -> 2CaCO₃ (sediment) + 2H₂O.

The method according to the invention relates to a process wherein the grain comprises 90% or more CaCO₃. This leads to an end result wherein the final purity of the grafted CaCO₃ is even higher than 90%, which is very well usable for use in a carpet backing. In particular, the percentage of SiO₂ is lower than 0.5%.

In the process according to the present invention, the CaCO₃ is grafted onto the grain until a diameter between 1 and 3 mm is obtained. Then the thus obtained grain is mould to a powder that is suitable for use in carpet backings (precoat and heavy coating layer). Therein the weight percentage of the CaCO₃ in the precoat is at least 12% and in the heavy coat is at least 40%.

## Claims

1. Method for producing a floor covering, in particular a carpet and carpet tile, with recycled content, comprising the steps of:
- gaining CaCO₃ from ground or surface water by:
- Gaining CaCO₃ from the ground or surface water during a softening process by:
- Adding a grain to the water;
- Grafting the CaCO₃ to the grain;
- adding the CaCO₃ to a floor covering raw material;
- using the thus obtained material in a floor covering manufacturing process;
**characterized in that** the grain comprises 90% or more CaCO₃.

2. Method according to claim 1, wherein the floor covering raw material is a fluid backing precoat and/or heavy coating material for a carpet or carpet tile.

3. Method according to claim 1 or 2, **characterised in that** the grain with grafted CaCO₃ is grounded to a predetermined particle size and particle size distribution before it is used as a backing material in the floor covering manufacturing process.

4. Method according to any of the preceding claims, wherein NaOH or Ca(HCO₃)₂ is used as an aid for speeding up the process.

5. Method according to any of the preceding claims, wherein the CaCO₃ is grafted onto the grain until a diameter between 1 and 3 mm is obtained.

6. Method according to any of the preceding claims, wherein the percentage of SiO₂ is lower than 0.5%.

7. Method according to claims 2-6, wherein the weight percentage of the CaCO₃ in the precoat is at least 12% and in the heavy coat is at least 40%.

## Patentansprüche

1. Verfahren zur Herstellung eines Bodenbelags, insbesondere von Teppich und Teppichfliese, mit recyceltem Inhalt, umfassend die Schritte:
- Gewinnen von CaCO₃ aus Grundwasser oder Oberflächenwasser durch:
- Gewinnen von CaCO₃ aus dem Grundwasser oder Oberflächenwassers während eines Weichmachprozesses durch:
- Zufügen eines Korns zu dem Wasser;
- Pfropfen von dem CaCO₃ auf das Korn;
- Zufügen von dem CaCO₃ zu einem Bodenbelagrohmaterial;
- Verwenden des so erhaltenen Materials in einem Fertigungsprozess für Bodenbelag;
**dadurch gekennzeichnet, dass** das Korn 90 % oder mehr CaCO₃ umfasst.

2. Verfahren nach Anspruch 1, wobei das Bodenbelagrohmaterial ein fließfähiger Vorstrich für Teppichgrund und/oder schweres Beschichtungsmaterial für einen Teppich oder eine Teppichfliese ist.

3. Verfahren nach Anspruch 1 oder 2, **dadurch gekennzeichnet, dass** das Korn mit gepfropftem CaCO₃ auf eine vorbestimmte Partikelgröße und Partikelgrößenverteilung gemahlen wird, bevor es als Teppichgrundmaterial in dem Fertigungsprozess für Bodenbelag verwendet wird.

4. Verfahren nach einem der vorhergehenden Ansprüche, wobei NaOH oder Ca(HCO₃)₂ als Hilfsmittel zum Beschleunigen des Prozesses verwendet wird.

5. Verfahren nach einem der vorhergehenden Ansprüche, wobei das CaCO₃ auf das Korn gepfropft wird, bis ein Durchmesser zwischen 1 und 3 mm erhalten wird.

6. Verfahren nach einem der vorhergehenden Ansprüche, wobei der Prozentsatz an SiO₂ niedriger als 0,5 % ist.

7. Verfahren nach den Ansprüchen 2 bis 6, wobei der Gewichtsprozentsatz von dem CaCO₃ in dem Vorstrich mindestens 12 % und in dem schweren Beschichtungsmaterial mindestens 40 % beträgt.

## Revendications

1. Procédé de fabrication d'un revêtement de sol, en particulier d'une moquette et d'une dalle de moquette, avec des ingrédients recyclés, comprenant les étapes qui consistent à :
- obtenir du CaCO₃ à partir d'eau souterraine ou d'eau de surface, par :
- obtention de CaCO₃ à partir d'eau souterraine ou d'eau de surface durant un procédé d'adoucissement par :
- addition d'un grain à l'eau ;
- greffage du CaCO₃ sur le grain ;
- ajouter le CaCO₃ à une matière première pour revêtement de sol ;
- utiliser le matériau ainsi obtenu dans un procédé de fabrication de revêtement de sol ;
**caractérisé en ce que** le grain comprend 90 % ou plus de CaCO₃.

2. Procédé selon la revendication 1, dans lequel la matière première pour revêtement de sol est une précouche d'endos fluide et/ou un matériau de revêtement lourd pour une moquette ou une dalle de moquette.

3. Procédé selon la revendication 1 ou 2, **caractérisé en ce que** le grain sur lequel le CaCO₃ a été greffé est broyé jusqu'à l'obtention d'une taille de particule et d'une distribution granulométrique prédéterminées avant d'être utilisé comme matériau pour l'endos dans le procédé de fabrication du revêtement de sol.

4. Procédé selon l'une quelconque des revendications précédentes, dans lequel du NaOH ou du Ca(HCO₃)₂ est utilisé comme auxiliaire technologique pour accélérer le processus.

5. Procédé selon l'une quelconque des revendications précédentes, dans lequel le CaCO₃ est greffé sur le grain jusqu'à l'obtention d'un diamètre de 1 à 3 mm.

6. Procédé selon l'une quelconque des revendications précédentes, dans lequel le pourcentage de SiO₂ est inférieur à 0,5 %.

7. Procédé selon les revendications 2 à 6, dans lequel le pourcentage pondéral du CaCO₃ est d'au moins 12 % dans la précouche et d'au moins 40 % dans la couche lourde.
